# EUROPÄISCHE PATENTSCHRIFT

(11) **EP 3 710 142 B1**
(45) Veröffentlichungstag und Bekanntmachung des Hinweises auf die Patenterteilung: **22.05.2024**
(21) Anmeldenummer: 18785610.9
(22) Anmeldetag: 11.10.2018
(51) Int. Cl.: B01D 61/18, B01D 36/00, B01D 61/20, B01D 61/22

(54) **VERFAHREN ZUM FILTRIEREN EINES GROSSEN VOLUMENS EINES MEDIUMS MIT EINER VORSTERILISIERBAREN, WENIGSTENS TEILAUTOMATISIERTEN EINWEG-FILTRATIONSVORRICHTUNG**
METHOD FOR FILTERING A LARGE VOLUME OF A MEDIUM WITH A PRE-STERILISABLE, AT LEAST SEMI-AUTOMATED ONE-WAY FILTRATION DEVICE
PROCÉDÉ POUR FILTRER UN GRAND VOLUME D'UN MILIEU AU MOYEN D'UN DISPOSITIF DE FILTRATION UNIDIRECTIONNEL PRÉ-STÉRILISABLE ET AU MOINS PARTIELLEMENT AUTOMATISÉ

(30) Priorität: 16.11.2017 DE 102017127020
(43) Veröffentlichungstag der Anmeldung: 23.09.2020
(73) Patentinhaber: Sartorius Stedim Biotech GmbH, 37079 Göttingen (DE)
(72) Erfinder: LOEWE, Thomas, 37079 Goettingen (DE); DIEL, Bernhard, 37079 Goettingen (DE); SOMMER, Maik, 37079 Goettingen (DE)
(74) Vertreter: Novagraaf International SA
(86) Internationale Anmeldenummer: PCT/EP2018/077755
(87) Internationale Veröffentlichungsnummer: WO 2019/096501

(56) Entgegenhaltungen:
- EP-A1- 2 119 492
- EP-A1- 3 012 012
- WO-A1-2016/177650
- WO-A1-2017/032560
- WO-A2-2007/118235
- WO-A2-2012/051517
- DE-U1-202017 103 082
- US-A1- 2005 171 501

## Beschreibung

Die Erfindung betrifft ein Verfahren zum Filtrieren eines großen Volumens eines Mediums mit einer vorsterilisierbaren, wenigstens teilautomatisierten Einweg-Filtrationsvorrichtung.

Im Bereich der Einweg- (Single Use) Technologieentwicklung für biopharmazeutische Anwendungen erfreuen sich Filtrationselemente einer zunehmenden Beliebtheit und werden inzwischen auf breiter Ebene eingesetzt. In den letzten Jahren haben sich zum Beispiel Einweg-Filtrationstechnologien stetig weiterentwickelt und werden derzeit nicht mehr nur im Laborbereich und im Bereich der Prozessentwicklung eingesetzt. Vielmehr sind inzwischen Einweg-Filtrationselemente auch in kommerziellen Herstellungsprozessen von pharmazeutischen Produkten für die klinischen Phasen 1 bis 3 (Entwicklungsstadien bei der Medikamentenentwicklung) oder auch in der kommerziellen Produktion solcher Wirkstoffe gebräuchlich. Derzeit am Markt erhältliche Einweg-Filtrationsvorrichtungen beschränken sich auf kleinere Filterelemente, die wiederum lediglich auf die reine Funktionalität "Filtrieren" beschränkt sind.

Die WO 2017/032560 A1 zeigt eine vollständig vorsterilisierbare, anschlussfertige und integritätstestbare Einweg-Filtrationsvorrichtung, die für großvolumige Filtrationsprozesse ausgelegt ist. Diese Einweg-Filtrationsvorrichtung umfasst eine Mehrzahl von Einweg-Filtercapsulen einer Standardgröße, die in einem vorgegebenen Raster angeordnet und durch Leitungen miteinander verbunden sind. Die Filtercapsulen werden von einer starren Halterung getragen.

Aus der WO 2016/177650 A1 ist eine modulare Anlage zur kontinuierlichen, keimreduzierten Produktion bzw. Aufbereitung eines biopharmazeutischen, biologischen makromolekularen Produktes aus einer heterogenen Zellkultur-Fluid-Mischung bekannt, das folgende Module umfasst: ein Filtrationsmodul, ein Chromatographiemodul, ein Ultrafiltrationsmodul bzw. ein Diafiltrationsmodul, ein Dialysemodul und ein Modul zur kontinuierlichen Virenabreicherung. Die modulare Anlage ist geschlossen und keimreduziert. Eine Besonderheit der Anlage ist die Möglichkeit eines automatischen Filterwechsels unter keimreduzierten Bedingungen. Die Beendigung der Entlüftung des neuen Filters wird auf der Unfiltratseite durch einen Drucksensor oder einen Füllstandssensor oder eine Waage oder einen Flüssigkeitsdetektor detektiert.

Bei den bisherigen Einweg-Filtrationselementen wurde aber die Frage nach einer Einbindung in automatisierte Prozesse nicht berücksichtigt. Mit dem oben beschriebenen Einzug der Einweg-Filtrationstechnologie in die kommerzielle Produktion erhöht sich neben der reinen Skalierung, also der erforderlichen Filtergröße und damit Filtrationsfläche, auch der Bedarf nach automatisierten Filtrationsverfahren. Dies erfordert die Einbettung von Filtrationselementen in Schlauchleitungen, Kunststoffverrohrungen, Einweg-Sensoren und Verbindungssysteme, die dann erst durch den Anschluss an ein geeignetes Kontroll- und Steuerungssystem zu einer ganzheitlichen Prozesslösung werden können.

Auf dem Gebiet der Einweg-Filtrationstechnologie besteht also ein Bedarf nach einer anschlussfertigen Einweg-Filtrationsvorrichtung, die ein teil- oder vollautomatisiertes Filtrationsverfahren, insbesondere in großem Maßstab, ermöglicht. Aufgabe der Erfindung ist es, darüber hinaus weitere kostengünstige Anwendungsmöglichkeiten zu erschließen, die auf (teil-)automatisierten Einweg-Filtrationsvorrichtungen basieren, welche für große Volumen ausgelegt sind.

Gelöst wird diese Aufgabe durch ein Verfahren mit den Merkmalen des Anspruchs 1. Vorteilhafte und zweckmäßige Ausgestaltungen des erfindungsgemäßen Verfahrens sind in den Unteransprüchen angegeben.

Das erfindungsgemäße Verfahren zum Filtrieren eines großen Volumens eines Mediums erfolgt mit einer vorsterilisierbaren, wenigstens teilautomatisierten Einweg-Filtrationsvorrichtung. Die Vorrichtung umfasst einen Unfiltrateingang, einen Filtratausgang, eine zwischen dem Unfiltrateingang und dem Filtratausgang verlaufende Hauptleitung, in der Hauptleitung angeordnete Filterelemente, eine Entlüftungsleitung sowie Sensoren zur Erfassung bestimmter Prozessparameter und Regeleinrichtungen zur Einstellung bestimmter Prozessparameter. Die Sensoren und Regeleinrichtungen sind mit einem externen Kontrollund Steuerungssystem verbunden, das zur Auswertung und Verarbeitung von Sensordaten sowie zur Ansteuerung der Regeleinrichtungen basierend auf einem oder mehreren Steuerungsalgorithmen eingerichtet ist. Das erfindungsgemäße Verfahren umfasst folgende Prozessschritte: a) Befüllen der Einweg-Filtrationsvorrichtung mit Medium mit geringem Fluss; b) Entlüften der Einweg-Filtrationsvorrichtung durch die Entlüftungsleitung; c) Schließen der Entlüftungsleitung; d) Spülen der Einweg-Filtrationsvorrichtung, insbesondere der Filterelemente; e) Filtration des Mediums mittels der Filterelemente; f) Nachspülen mit hohem Fluss; und g) Schließen der Hauptleitung; wobei die Prozessschritte f) und g) optional sind.

Die Erfindung beruht auf der Erkenntnis, dass je nach Automatisierungsgrad auf bestimmte Komponenten der Einweg-Filtrationsvorrichtung verzichtet werden kann, wenn andere zur Verfügung stehende Daten geschickt in die Steuerung bzw. Regelung des Prozessablaufs einbezogen werden. Darüber hinaus kann seitens des Anwenders der Installationsaufwand minimal gehalten werden, da die Einweg-Filtrationsvorrichtung mit den je nach Automatisierungsgrad erforderlichen Komponenten als kompakte, Einheit vorgefertigt und vorsterilisiert werden kann. Somit ist - neben der Kostenersparnis durch eingesparte Komponenten - für den Anwender sowohl die Handhabung der Einweg-Filtrationsvorrichtung als solcher als auch die Durchführung des gewünschten Filtrationsprozesses vereinfacht.

Des Weiteren kann zumindest im Prozessschritt e) als Regelgröße ein vom Eingangsdrucksensor erfasster Eingangsdruck herangezogen werden.

Die Nutzung des erfindungsgemäß vorgesehenen Drucksensors am Filtratausgang ist dann nicht erforderlich.

Des Weiteren kann zumindest im Prozessschritt e) die Steuerung des Flusses über eine Kennlinie der Förderpumpe, den Eingangsdrucksensor und einen Entlüftungsflüssigkeitsdetektor erfolgen. Die Nutzung des erfindungsgemäß vorgesehenen Drucksensors ist dann nicht erforderlich.

Des Weiteren kann zumindest im Prozessschritt e) als Regelgröße ein vom Eingangsdrucksensor erfasster Eingangsdruck herangezogen werden und ggf. eine Absperrung der Hauptleitung durch ein Handventil erfolgen.

Die Nutzung des erfindungsgemäß vorgesehenen Regelventils am Filtratausgang ist dann nicht erforderlich.

Des Weiteren kann der Prozessschritt g) durch einfaches Sperren der Hauptleitung mit einem Absperrventil entweder am Unfiltrateingang oder am Filtratausgang erfolgen. Dabei kann die Steuerung des Absperrventils über eine Kennlinie der Förderpumpe, den Eingangsdrucksensor und einen Entlüftungsflüssigkeitsdetektor erfolgen. Somit kann anstelle der Nutzung des erfindungsgemäß vorgesehenen Eingangsregelventils bzw. des erfindungsgemäß vorgesehenen Ausgangsregelventils ein einfaches Absperrventil verwendet werden, wenn eine Regelung nicht zwingend erforderlich ist.

Des Weiteren kann ein Entlüftungsflüssigkeitsdetektor an einem Gehäuse eines Sterilluftfilters oder an einem Verteiler- bzw. Sammelrohr zur Leerlaufüberwachung und/oder zur Luftansammlungsüberwachung genutzt werden. Dieser Entlüftungsflüssigkeitsdetektor ist zusätzlich oder anstelle eines Entlüftungsflüssigkeitsdetektors an der Entlüftungsleitung vorgesehen, um erforderlichenfalls ein früheres Sperren der Entlüftungsleitung zu erreichen.

Im Rahmen einer Teilautomatisierung mit geringerem Geräteaufwand kann die Einweg-Filtrationsvorrichtung ferner einen Entlüftungsflüssigkeitsdetektor und ein manuell bedientes einfaches Entlüftungsventil umfassen, wobei die Prozessschritte a), b) und c) manuell durchgeführt werden und die Prozessschritte d), e) und f) automatisiert basierend auf einem vom Eingangsdrucksensor erfassten Eingangsdruck geregelt und/oder basierend auf einer Kennlinie der Förderpumpe gesteuert werden.

Des Weiteren kann die Einweg-Filtrationsvorrichtung ferner einen Entlüftungsflüssigkeitsdetektor und ein manuell bedientes einfaches Entlüftungsventil umfassen, wobei die Prozessschritte a), b) und c) manuell durchgeführt werden die Prozessschritte d), e) und f) automatisiert basierend auf einem vom Durchflusssensor erfassten Fluss und einem vom Eingangsdrucksensor erfassten Eingangsdruck geregelt werden.

Des Weiteren kann die Einweg-Filtrationsvorrichtung ferner einen Entlüftungsflüssigkeitsdetektor und ein manuell bedientes einfaches Entlüftungsventil umfassen, wobei die Prozessschritte a), b) und c) manuell durchgeführt werden und die Prozessschritte d), e) und f) automatisiert basierend auf einem vom Durchflusssensor erfassten Fluss und einem vom Eingangsdrucksensor erfassten Eingangsdruck einschließlich An- und Abfahrrampen geregelt werden.

Die Einweg-Filtrationsvorrichtung kann auch mit einer Minimalausstattung teilautomatisiert betrieben werden. In diesem Fall umfasst die Einweg-Filtrationsvorrichtung ferner ein manuell bedientes einfaches Entlüftungsventil, wobei die Prozessschritte a), b) und c) manuell durchgeführt werden und die Prozessschritte d), e) und f) automatisiert basierend auf einem vom Eingangsdrucksensor erfassten Eingangsdruck geregelt und/oder basierend auf einer Kennlinie der Förderpumpe gesteuert werden.

Der optionale Prozessschritt f) wird vorzugsweise drucküberwacht durchgeführt.

Zur Erweiterung der Funktionalität können weitere Komponenten an der Einweg-Filtrationsvorrichtung vorgesehen und in das Verfahren einbezogen werden:
Im Rahmen einer automatisierten Säure- bzw. Lauge-Dosierung kann ein in die Einweg-Filtrationsvorrichtung integrierter pH-Sensor zur automatisierten Einstellung eines pH-Werts verwendet werden.

Im Rahmen einer oder mehrerer, vorzugsweise steriler, Probenahmen, vorzugsweise in vorgegebenen Zeit- und/oder Fraktionsintervallen, kann ein automatisierter Aktuator verwendet werden.

Im Rahmen eines Vorspülens oder Benetzens der Filterelemente kann ein automatisierter Spülmediumzugang verwendet werden.

Im Rahmen eines Abführens von Spül- bzw. Benetzungsmedium oder eines Prozessvorlaufs kann ein automatisierter Drainageabgang oder ein automatisierter Gaszugang verwendet werden.

Im Rahmen einer Prozessüberwachung und/oder Dokumentation bzw. Datenarchivierung kann wenigstens einer der folgenden Sensoren verwendet werden, der in die Einweg-Filtrationsvorrichtung integriert ist: - kapazitiver, induktiver, Ultraschall-, Vibrations- oder konduktiver Sensor zur Füllstandmessung bzw. Flüssigkeitsdetektion; Temperatursensor; pH-Sensor; Leitfähigkeitssensor; TOC-Sensor; Sensor zur Trübungsmessung.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht einer Einweg-Filtrationsvorrichtung mit Anschlussleitungen und weiteren Anschlusselementen; und
- Figur 2 eine schematische Seitenansicht einer (teil-)automatisierten Einweg-Filtrationsvorrichtung.

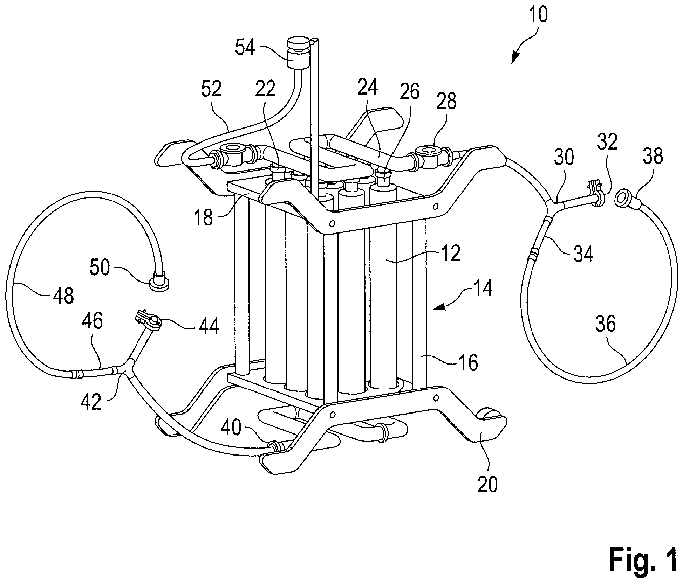

In Figur 1 ist beispielhaft eine (teil-)automatisierte, für große Volumen ausgelegte Einweg-Filtrationsvorrichtung 10 dargestellt, die der aus der WO 2017/032560 A1 bekannten Vorrichtung ähnlich ist. Eine Mehrzahl von Filtercapsulen 12 wird von einer starren Halterung 14 in einer vorgegebenen Anordnung (Raster) in Position gehalten. Der Begriff "Filtercapsule" ist hier allgemein zu verstehen und soll jegliche eigenständig montierbare Baugruppe mit einem oder mehreren Filterelementen (Membranen), die in einer oder mehreren Filtereinheiten verbaut sind, bezeichnen. Die Halterung 14 umfasst Stützsäulen 16, die durch Querstreben 18 miteinander verbunden sind. Standfüße 20 sorgen für einen sicheren Halt der Vorrichtung 10. An den Querstreben 18 sind Haltemittel 22 für die einzelnen Filtercapsulen 12 vorgesehen. Die Filtercapsulen 12 sind vollständig oder zumindest großteils durch starre, druckstabile Rohrleitungen 24 miteinander verbunden. Der konkrete Verlauf der hier beispielhaft dargestellten Rohrleitungen 24 ist bestimmt durch den vorgesehenen Betrieb der Filtrationsvorrichtung (Parallel- oder Reihenschaltung der Filtercapsulen 12), wobei die Rohrleitungen 24 die notwendigen Abzweigungen 26 zu den einzelnen Filtercapsulen 12 aufweisen. Soweit erforderlich sind die Rohrleitungen 24 an der Halterung 14 befestigt. Die wesentlichen Bestandteile der starren Halterung 14, die starren Gehäuse der Filtercapsulen 12 und die starren Rohrleitungen 24 sind allesamt vorzugsweise aus demselben Material gebildet. Dieses Material und ggf. weitere Materialien, die bei der Vorrichtung 10 Verwendung finden (z. B. für etwaige flexible Schlauchleitungen), sind sterilisierbar, insbesondere mittels Gammastrahlung, und autoklavierbar. Die Einweg-Filtrationsvorrichtung 10 kann somit im vormontierten, d. h. anschlussfertigen Zustand sterilisiert und anschließend verpackt bzw. verpackt und anschließend sterilisiert werden. Die Einweg-Filtrationsvorrichtung 10 ist für einen großvolumigen Filtrationsprozess ausgelegt. Insbesondere stellen die Filtercapsulen 12 insgesamt eine ausreichend große Filtrationsfläche für einen solchen Prozess zur Verfügung.

In Figur 1 sind beispielhaft Leitungen, Verzweigungen und Anschlüsse gezeigt, die für die Einbindung bestimmter Sensoren und Regeleinrichtungen zur Automatisierung der Einweg-Filtrationsvorrichtung 10 vorgesehen sein können. An einen Unfiltrateingang der starren Einweg-Filtrationsvorrichtung 10 ist über ein Schlauchstück ein Einlassventil 28 angeschlossen. Stromaufwärts des Einlassventils 28 ist eine Verzweigung 30 vorgesehen, an deren einem Leitungszweig eine Tri-Clamp-Verbinndung 32 und an deren anderem Leitungszweig ein verstärktes Zwischenschlauchstück 34 und eine daran angeschlossene Eingangsschlauchleitung 36 mit einem ersten Sterilkonnektor 38 vorgesehen sind. Ein Filtratausgang der starren Einweg-Filtrationsvorrichtung 10 ist über ein Schlauchstück ein Auslassventil 40 angeschlossen. Stromabwärts des Auslassventils 40 ist eine Verzweigung 42 vorgesehen, an deren einem Leitungszweig eine Tri-Clamp-Verbinndung 44 und an deren anderem Leitungszweig ein verstärktes Zwischenschlauchstück 46 und eine daran angeschlossene Ausgangsschlauchleitung 48 mit einem zweiten Sterilkonnektor 50 vorgesehen sind. Von einem Entlüftungsausgang der Einweg-Filtrationsvorrichtung 10 führt eine verstärkte Entlüftungsleitung 52 zu einem Luftfilterhalter, der einen Sterilluftfilter 54 trägt.

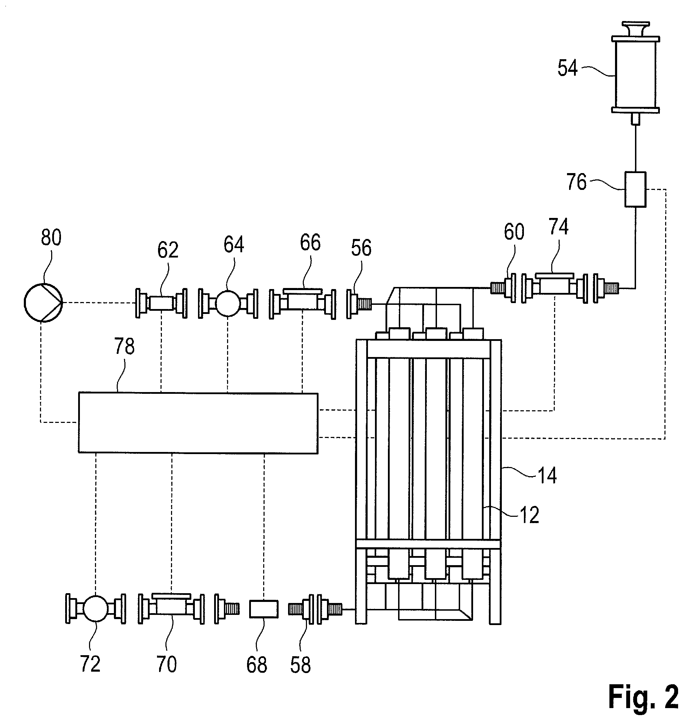

Anhand der in Figur 2 gezeigten beispielhaften Konfiguration einer Einweg-Filtrationsvorrichtung 10 wird die Einbindung von Sensoren und Regeleinrichtungen zur Automatisierung der Einweg-Filtrationsvorrichtung 10 näher erläutert. Der Übersichtlichkeit halber sind bewusst nicht alle Komponenten und Leitungszweige dargestellt. Wie bereits erwähnt sind an einem Unfiltrateingang 56, an einem Filtratausgang 58 und an einem Entlüftungsausgang (bzw. Lufteingang) 60 der Einweg-Filtrationsvorrichtung 10 jeweils (ggf. zusätzliche) Schlauchanschlüsse für die nachfolgend beschriebenen Sensoren und Regeleinrichtungen vorgesehen, die allesamt als Einweg-Komponenten ausgelegt sind.

Am Unfiltrateingang 56 sind ein Durchflusssensor 62 zur Bestimmung des durchströmenden Volumens pro Zeiteinheit, ein Eingangsdrucksensor 64 und ein Eingangsregelventil 66 vorgesehen. Am Filtratausgang 58 sind ein Ausgangsflüssigkeitsdetektor 68, ein Ausgangsregelventil 70 und ein Ausgangsdrucksensor 72 vorgesehen. Am Entlüftungsausgang 60 sind ein Entlüftungsregelventil 74 und ein Entlüftungsflüssigkeitsdetektor 76 vorgesehen.

Voraussetzung für eine vollständige oder teilweise (einzelne Prozessschritte) Automatisierung der Einweg-Filtrationsvorrichtung 10 ist grundsätzlich, dass die eingebundenen Sensoren und Regeleinrichtungen über elektrische Leitungen mit einem Kontroll- und Steuerungssystem 78 in Verbindung stehen und somit eine Steuerung des Gesamtprozesses bzw. des jeweiligen Prozessschritts ermöglichen. Die elektrischen Leitungen dienen einerseits zur Betätigung der Sensoren und Regeleinrichtungen und andererseits, soweit vorgesehen, zum Übermitteln und/oder Empfangen von Daten oder Signalen, die für die Kontrolle und/oder Steuerung benötigt werden. Die Daten- bzw. Signalübertragung kann alternativ auch über Funk erfolgen. Das Kontroll- und Steuerungssystem 78 ist keine Einweg-Komponente, sondern eine entfernt von den Filtercapsulen 12 angeordnete Elektronik, die geeignete Software und Hardware zur Auswertung und Verarbeitung von Sensordaten sowie zur Ansteuerung der Regeleinrichtungen basierend auf einem oder mehreren Steuerungsalgorithmen enthält.

Nachfolgend werden beispielhaft verschiedene Automatisierungsmöglichkeiten beschrieben und die hierfür zwingend benötigten Komponenten und deren Anordnung erläutert bzw. die hierfür gerade nicht benötigten Komponenten genannt. Neben der eigentlichen vorsterilisierbaren Einweg-Filtrationsvorrichtung 10 mit den Filterelementen und dem Kontroll- und Steuerungssystem 78 können dies einzelne oder mehrere Komponenten sein, deren Art und Anordnung in Figur 2 beispielhaft gezeigt und oben beispielhaft beschrieben wurde, oder es handelt sich um Komponenten, deren Art und Anordnung im Rahmen der nachfolgend beschriebenen Anwendungen näher erläutert wird.

### A) Vollautomatisierung mit geringerem Geräteaufwand:

Eine Vollautomatisierung eines mit der Einweg-Filtrationsvorrichtung 10 durchgeführten Filtrationsprozesses mit geringerem Geräteaufwand als bei einem entsprechenden manuell durchgeführten Prozess bietet die Möglichkeit, mit geringerem Bauaufwand, Systemumfang und geringeren Kosten die gleiche Grundfunktion zu erreichen. Dies ist insbesondere dann von Belang, wenn anwenderseitig Aufstellplatz, Steuerungssystemkapazität und/oder finanzielles Budget begrenzt sind.

Als Grundfunktion wird hier beispielhaft ein Filtrationsprozess angenommen, der folgende Prozessschritte beinhaltet: Befüllen der Einweg-Filtrationsvorrichtung 10 mit geringem Fluss bei gleichzeitiger Entlüftung; Schließen der Entlüftungsleitung 52; Spülen, Filtration und Nachspülen drucküberwacht mit hohem Fluss; Schließen der Hauptleitung (einfach, d. h. entweder am Eingang oder am Ausgang).

Diese Grundfunktion kann mit nur einem Teil der Ausstattung der in Figur 2 gezeigten Einweg-Filtrationsvorrichtung 10 durchgeführt werden, insbesondere:
- ohne den erfindungsgemäß vorgesehenen Flüssigkeitsdetektor 68 am Filtratausgang 58, da die Anwesenheit von Flüssigkeit am Filtratausgang 58 aus dem Eingangsflusssignal des Durchflusssensors 62 und dem bekannten Systemvolumen bestimmbar ist;
- ohne den erfindungsgemäß vorgesehenen Drucksensor 72 am Filtratausgang 58, da als Regelgröße der Eingangsdruck herangezogen wird;
- ohne den erfindungsgemäß vorgesehenen Durchflusssensor 62, wenn die Steuerung des Flusses über die Kennlinie der Förderpumpe 80, den Eingangsdrucksensor 64 und den Entlüftungsflüssigkeitsdetektor 76 erfolgt;
- ohne das erfindungsgemäß vorgesehene Regelventil 70 am Filtratausgang 58, da als Regelgröße der Eingangsdruck herangezogen wird und ggf. eine Absperrung durch ein Handventil erfolgt;
- Verwendung eines einfachen Absperrventils (nur Auf/Zu) anstelle des erfindungsgemäß vorgesehenen Eingangsregelventils 66 bzw. des erfindungsgemäß vorgesehenen Ausgangsregelventils 70, da eine Regelung nicht zwingend erforderlich ist und die Steuerung des Absperrventils über die Kennlinie der Förderpumpe 80, den Eingangsdrucksensor 64 und den Entlüftungsflüssigkeitsdetektor 76 erfolgt;
- Verwendung eines Entlüftungsflüssigkeitsdetektors am Gehäuse des Sterilluftfilters 54 oder an einem als gemeinsame Entlüftungsrohrleitung dienenden (hier nicht dargestellten) Verteiler- bzw. Sammelrohr, zusätzlich oder anstelle des Entlüftungsflüssigkeitsdetektors 76 an der Entlüftungsleitung 52, wobei der Entlüftungsflüssigkeitsdetektor gleichzeitig zur Leerlaufüberwachung und/oder zur Luftansammlungsüberwachung genutzt wird, um ein früheres Sperren der Entlüftungsleitung 52 zu erreichen.

### B) Teilautomatisierung mit geringerem Geräteaufwand:

Eine Teilautomatisierung einer mit der Einweg-Filtrationsvorrichtung 10 durchgeführten reduzierten Grundfunktion ist im Vergleich zu einer rein manuellen Durchführung mit deutlich verringertem Bauaufwand, Systemumfang und geringeren Kosten möglich. Der Betrieb der Einweg-Filtrationsvorrichtung 10 kann in diesem Fall von nur einer Bedienperson bewerkstelligt werden. Grundsätzlich ist eine alleinige Teilautomatisierungsfunktion oder eine beliebige Kombination aus folgenden Ausstattungsoptionen (basierend auf den erfindungsgemäß vorgesehenen Sensoren und Regeleinrichtungen) möglich:
- Eingangsdrucksensor 64, Entlüftungsflüssigkeitsdetektor 76 an der Entlüftungsleitung 52 oder am Sterilluftfilter 54, gesteuerte/geregelte Förderpumpe 80, manuell bedientes einfaches Entlüftungsventil 74 (nur Auf/Zu). Die Einrichtung bzw. Vorbereitung der Einweg-Filtrationsvorrichtung 10 erfolgt manuell, während die zeitintensiven Prozessschritte wie Spülen und Filtrieren über den Eingangsdruck geregelt oder über die Kennlinie der Förderpumpe 80 gesteuert werden.
- Eingangsdrucksensor 64, Durchflusssensor 62, Entlüftungsflüssigkeitsdetektor 76 an der Entlüftungsleitung 52 oder am Sterilluftfilter 54, gesteuerte/geregelte Förderpumpe 80, manuell bedientes einfaches Entlüftungsventil 74 (nur Auf/Zu). Die Einrichtung bzw. Vorbereitung der Einweg-Filtrationsvorrichtung 10 erfolgt manuell, während die zeitintensiven Prozessschritte wie Spülen und Filtrieren über den Durchfluss und den Eingangsdruck geregelt werden.
- Eingangsdrucksensor 64, Durchflusssensor 62, Entlüftungsflüssigkeitsdetektor 76 an der Entlüftungsleitung 52 oder am Sterilluftfilter 54, gesteuerte/geregelte Förderpumpe 80, automatisiertes Eingangsregelventil 66, manuell bedientes einfaches Entlüftungsventil 74 (nur Auf/Zu). Die Einrichtung bzw. Vorbereitung der Einweg-Filtrationsvorrichtung 10 erfolgt manuell, während die zeitintensiven Prozessschritte wie Spülen und Filtrieren über den Durchfluss und den Eingangsdruck geregelt werden, wobei die Regelung von An- und Abfahrrampen möglich ist.

### C) Minimalausstattung:

Die Grundfunktion ist auch mit einer minimalen Ausstattung bei maximal verringertem Bauaufwand, Systemumfang und verringerten Kosten durchführbar. In diesem Fall sollten zumindest zeitweise zwei Personen zur Bedienung zur Verfügung stehen. Als Minimalausstattung (basierend auf den erfindungsgemäß vorgesehenen Sensoren und Regeleinrichtungen) sind vorgesehen:
- Eingangsdrucksensor 64, gesteuerte/geregelte Förderpumpe 80, manuell bedientes einfaches Entlüftungsventil 74 (nur Auf/Zu). Die Einrichtung bzw. Vorbereitung und das Entlüften der Einweg-Filtrationsvorrichtung 10 erfolgen manuell, idealerweise durch zwei Personen, während die zeitintensiven Prozessschritte wie Spülen und Filtrieren über den Eingangsdruck geregelt oder über die Kennlinie der Förderpumpe 80 gesteuert werden.

### D) Erweiterte Funktionalität:

Zur Erweiterung der Funktionalität können zusätzliche Sensoren, Aktuatoren und Einrichtungen in die Einweg-Filtrationsvorrichtung 10 integriert werden. Vorteilhaft dabei ist das Einsparen separater Einheiten bzw. Prozessschritte sowie die damit verbundene Geräte-, Platz- und Kosteneinsparung. Beispiele hierfür sind:
- automatisierte Säure-/Lauge-Dosierung mithilfe eines pH-Sensors zur Einstellung des pH-Werts;
- Probenahme, in vorgegebenen Zeit- und/oder Fraktionsintervallen (Take One), sowie sterile Probenahme (zur Qualitätskontrolle) durch einen automatisierten Aktuator;
- automatisierter Spülmediumzugang (zum Vorspülen, Benetzen);
- automatisierter Drainageabgang (Abfuhr von Spül- bzw. Benetzungsmedium, Prozessvorlauf);
- automatisierter Gaszugang (zur Entleerung von Spül- und Prozessflüssigkeit).

### E) Erweiterte Messtechnik:

Für eine permanente Prozessüberwachung und Dokumentation/Datenarchivierung bei sensiblen oder hochregulierten oder auch bei sehr hochwertigen Prozessen ist die Integration weiterer inline- und/oder online-fähiger Sensorik vorteilhaft. Beispiele hierfür sind:
- Füllstandmessung bzw. Flüssigkeitsdetektion mittels kapazitiver, induktiver, Ultraschall-, Vibrations- oder konduktiver Sensoren. Ein Anwendungsbeispiel ist die Überwachung und Dokumentation der kompletten Füllung aller Filtercapsulen 12 in Filtrationsprozessen, in denen eine komplette Nutzung der Filterfläche zur Filtrationsfunktion oder aus regulativen Gründen notwendig ist, wie etwa bei einer Virusfiltration oder Tiefenfiltration mit Begrenzung der Flächenbelastung (Filtratmenge/Filterfläche) aufgrund von Durchbruchsverhalten.
- Temperaturmessung mittels eines Temperatursensors. Ein Anwendungsbeispiel ist die Überwachung und Dokumentation von festgelegten Temperaturvorgaben für die gesamte Prozessdauer, wie z. B. in aseptischen Prozessen, welche zur mikrobiologischen Aktivitätsminimierung permanent im Temperaturbereich von 2 °C bis 4 °C betrieben werden müssen, oder die Überwachung des Temperatureintrag durch den Pumpeneinsatz.
- pH-Messung mittels eines pH-Sensors. Ein Anwendungsbeispiel ist die Überwachung und Dokumentation bei der Herstellung und Abfüllung von Pufferlösungen.
- Leitfähigkeitsmessung mittels eines geeigneten Sensors. Ein Anwendungsbeispiel ist die Überwachung und Dokumentation bei der Herstellung und Abfüllung von Pufferlösungen, bei Aussalzungs- und Chromatographieprozessen sowie bei Vorspül- und Reinigungsprozessen.
- TOC-Messung (total organic carbon) mittels eines geeigneten Sensors. Ein Anwendungsbeispiel ist die Überwachung und Dokumentation bei der Herstellung und Abfüllung von Vorspül- und Reinigungsprozessen.
- Trübungsmessung mittels eines geeigneten Sensors. Ein Anwendungsbeispiel ist die Überwachung und Dokumentation bei durchbruchsgefährdeten Prozessen wie Tiefen- oder Faservorfilterprozessen.

### Bezugszeichenliste

- 10: Einweg-Filtrationsvorrichtung
- 12: Filtercapsule
- 14: Halterung
- 16: Stützsäule
- 18: Querstrebe
- 20: Standfuß
- 22: Haltemittel
- 24: Rohrleitung
- 26: Abzweigung
- 28: Einlassventil
- 30: Verzweigung
- 32: Tri-Clamp-Verbinndung
- 34: Zwischenschlauchstück
- 36: Eingangsschlauchleitung
- 38: erster Sterilkonnektor
- 40: Auslassventil
- 42: Verzweigung
- 44: Tri-Clamp-Verbinndung
- 46: Zwischenschlauchstück
- 48: Ausgangsschlauchleitung
- 50: zweiter Sterilkonnektor
- 52: Entlüftungsleitung
- 54: Sterilluftfilter
- 56: Unfiltrateingang
- 58: Filtratausgang
- 60: Entlüftungsausgang
- 62: Durchflusssensor
- 64: Eingangsdrucksensor
- 66: Eingangs(regel)ventil
- 68: Ausgangsflüssigkeitsdetektor
- 70: Ausgangs(regel)ventil
- 72: Ausgangsdrucksensor
- 74: Entlüftungs(regel)ventil
- 76: Entlüftungsflüssigkeitsdetektor
- 78: Kontroll- und Steuerungssystem
- 80: Förderpumpe

## Patentansprüche

1. Verfahren zum Filtrieren eines großen Volumens eines Mediums mit einer vorsterilisierten, wenigstens teilautomatisierten Einweg-Filtrationsvorrichtung (10), die einen Unfiltrateingang (56), einen Filtratausgang (58), eine zwischen dem Unfiltrateingang (56) und dem Filtratausgang (58) verlaufende Hauptleitung, in der Hauptleitung angeordnete Filterelemente, eine Entlüftungsleitung (52) sowie Sensoren zur Erfassung bestimmter Prozessparameter und Regeleinrichtungen zur Einstellung bestimmter Prozessparameter umfasst,
wobei die Sensoren folgende Sensoren umfassen: einen am Unfiltrateingang (56) angeordneten Durchflusssensor (62); einen am Unfiltrateingang (56) angeordneten Eingangsdrucksensor (64); einen am Filtratausgang (58) angeordneten Ausgangsflüssigkeitsdetektor (68); einen am Filtratausgang (58) angeordneten Ausgangsdrucksensor (72),
wobei die Regeleinrichtungen folgende Regeleinrichtungen umfassen: ein am Unfiltrateingang (56) angeordnetes Eingangsregelventil (66); ein am Filtratausgang (58) angeordnetes Ausgangsregelventil (70); eine gesteuerte oder geregelte Förderpumpe (80),
wobei die Sensoren und Regeleinrichtungen mit einem externen Kontroll- und Steuerungssystem (78) verbunden sind, das zur Auswertung und Verarbeitung von Sensordaten sowie zur Ansteuerung der Regeleinrichtungen basierend auf einem oder mehreren Steuerungsalgorithmen eingerichtet ist, mit folgenden Prozessschritten:
a) Befüllen der Einweg-Filtrationsvorrichtung (10) mit einem Benetzungsmedium mit geringem Fluss;
b) Entlüften der Einweg-Filtrationsvorrichtung (10) durch die Entlüftungsleitung (52);
c) Schließen der Entlüftungsleitung (52);
d) Spülen der Einweg-Filtrationsvorrichtung (10), insbesondere der Filterelemente, mit einem Spülmedium;
e) Filtration des Mediums mittels der Filterelemente;
f) Nachspülen mit einem Spülmedium mit hohem Fluss; und
g) Schließen der Hauptleitung;
wobei wenigstens die Schritte d) und e) vom Kontroll- und Steuerungssystem (78) gesteuert werden, und
wobei die Prozessschritte f) und g) optional sind.

2. Verfahren nach Anspruch 1, **dadurch gekennzeichnet, dass** zumindest im Prozessschritt e) als Regelgröße ein vom am Unfiltrateingang (56) angeordneten Eingangsdrucksensor (64) erfasster Eingangsdruck herangezogen wird.

3. Verfahren nach Anspruch 2, **dadurch gekennzeichnet, dass** zumindest im Prozessschritt e) die Steuerung des Flusses über eine Kennlinie der Förderpumpe (80), den Eingangsdrucksensor (64) und einen Entlüftungsflüssigkeitsdetektor (76) erfolgt.

4. Verfahren nach einem der vorhergehenden Ansprüche, **dadurch gekennzeichnet, dass** zumindest im Prozessschritt e) als Regelgröße ein vom Eingangsdrucksensor (64) erfasster Eingangsdruck herangezogen wird und ggf. eine Absperrung der Hauptleitung durch ein Handventil erfolgt.

5. Verfahren nach einem der vorhergehenden Ansprüche, **dadurch gekennzeichnet, dass** der Prozessschritt g) durch einfaches Sperren der Hauptleitung mit einem Absperrventil entweder am Unfiltrateingang (56) oder am Filtratausgang (58) erfolgt, wobei vorzugsweise die Steuerung des Absperrventils über eine Kennlinie der Förderpumpe (80), den Eingangsdrucksensor (64) und einen Entlüftungsflüssigkeitsdetektor (76) erfolgt.

6. Verfahren nach einem der vorhergehenden Ansprüche, **dadurch gekennzeichnet, dass** ein Entlüftungsflüssigkeitsdetektor an einem Gehäuse eines Sterilluftfilters (54) oder an einem Verteiler- oder Sammelrohr zur Leerlaufüberwachung und/oder zur Luftansammlungsüberwachung genutzt wird.

7. Verfahren nach einem der vorhergehenden Ansprüche, **dadurch gekennzeichnet, dass** die Einweg-Filtrationsvorrichtung (10) ferner einen Entlüftungsflüssigkeitsdetektor (76) und ein manuell bedientes einfaches Entlüftungsventil (74) umfasst, wobei die Prozessschritte a), b) und c) manuell durchgeführt werden und die Prozessschritte d), e) und f) automatisiert basierend auf einem vom Eingangsdrucksensor (64) erfassten Eingangsdruck geregelt und/oder basierend auf einer Kennlinie der Förderpumpe (80) gesteuert werden.

8. Verfahren nach einem der Ansprüche 1 bis 6, **dadurch gekennzeichnet, dass** die Einweg-Filtrationsvorrichtung (10) ferner einen Entlüftungsflüssigkeitsdetektor (76) und ein manuell bedientes einfaches Entlüftungsventil (74) umfasst, wobei die Prozessschritte a), b) und c) manuell durchgeführt werden und die Prozessschritte d), e) und f) automatisiert basierend auf einem vom Durchflusssensor (62) erfassten Fluss und einem vom Eingangsdrucksensor (64) erfassten Eingangsdruck geregelt werden.

9. Verfahren nach einem der Ansprüche 1 bis 6, **dadurch gekennzeichnet, dass** die Einweg-Filtrationsvorrichtung (10) ferner einen Entlüftungsflüssigkeitsdetektor (76) und ein manuell bedientes einfaches Entlüftungsventil (74) umfasst, wobei die Prozessschritte a), b) und c) manuell durchgeführt werden und die Prozessschritte d), e) und f) automatisiert basierend auf einem vom Durchflusssensor (62) erfassten Fluss und einem vom Eingangsdrucksensor (64) erfassten Eingangsdruck einschließlich An- und Abfahrrampen geregelt werden.

10. Verfahren nach einem der Ansprüche 1 bis 6, **dadurch gekennzeichnet, dass** die Einweg-Filtrationsvorrichtung (10) ferner ein manuell bedientes einfaches Entlüftungsventil (74) umfasst, wobei die Prozessschritte a), b) und c) manuell durchgeführt werden und die Prozessschritte d), e) und f) automatisiert basierend auf einem vom Eingangsdrucksensor (64) erfassten Eingangsdruck geregelt und/oder basierend auf einer Kennlinie der Förderpumpe (80) gesteuert werden.

11. Verfahren nach einem der vorhergehenden Ansprüche, **dadurch gekennzeichnet, dass** der Prozessschritt f) drucküberwacht durchgeführt wird.

12. Verfahren nach einem der vorhergehenden Ansprüche, **dadurch gekennzeichnet, dass** im Rahmen einer Säure- bzw. Lauge-Dosierung ein in die Einweg-Filtrationsvorrichtung (10) integrierter pH-Sensor zur automatisierten Einstellung eines pH-Werts verwendet wird, und/oder dass im Rahmen einer oder mehrerer, vorzugsweise steriler, Probenahmen, vorzugsweise in vorgegebenen Zeitund/oder Fraktionsintervallen, ein automatisierter Aktuator verwendet wird.

13. Verfahren nach einem der vorhergehenden Ansprüche, **dadurch gekennzeichnet, dass** im Rahmen eines Vorspülens oder Benetzens der Filterelemente ein automatisierter Spülmediumzugang verwendet wird, und/oder dass im Rahmen eines Abführens von Spül- bzw. Benetzungsmedium oder eines Prozessvorlaufs ein automatisierter Drainageabgang oder ein automatisierter Gaszugang verwendet wird.

14. Verfahren nach einem der vorhergehenden Ansprüche, **dadurch gekennzeichnet, dass** im Rahmen einer Prozessüberwachung und/oder Dokumentation bzw. Datenarchivierung wenigstens einer der folgenden Sensoren verwendet wird, der in die Einweg-Filtrationsvorrichtung (10) integriert ist:
- kapazitiver, induktiver, Ultraschall-, Vibrations- oder konduktiver Sensor zur Füllstandmessung bzw. Flüssigkeitsdetektion;
- Temperatursensor;
- pH-Sensor;
- Leitfähigkeitssensor;
- TOC-Sensor;
- Sensor zur Trübungsmessung.

## Claims

1. Method of filtering a large volume of a medium using a pre-sterilized, at least partially automated single-use filtration device (10) which includes an unfiltrate inlet (56), a filtrate outlet (58), a main line running between the unfiltrate inlet (56) and the filtrate outlet (58), filter elements arranged in the main line, a venting line (52) and sensors for detecting specific process parameters and regulating means for adjusting specific process parameters,
wherein the sensors comprise the following sensors: a flow sensor (62) arranged at the unfiltrate inlet (56); an inlet pressure sensor (64) arranged at the unfiltrate inlet (56); an outlet liquid detector (68) arranged at the filtrate outlet (58); an outlet pressure sensor (72) arranged at the filtrate outlet (58),
wherein the regulating means comprise the following regulating means: an inlet regulating valve (66) arranged at the unfiltrate inlet (56); an outlet regulating valve (70) arranged at the filtrate outlet (58); a controlled or regulated feed pump (80),
wherein the sensors and regulating means are connected to an external monitoring and control system (78) which is adapted for evaluating and processing sensor data and for piloting the regulating means based on one or more control algorithms, comprising the following process steps:
a) filling the single-use filtration device (10) with a wetting medium using low flow;
b) venting the single-use filtration device (10) through the venting line (52);
c) closing the venting line (52);
d) rinsing the single-use filtration device (10), in particular the filter elements, using a rinsing medium;
e) filtering the medium using the filter elements;
f) re-rinsing with a rinsing medium using high flow; and
g) closing the main line;
wherein at least steps d) and e) are controlled by the monitoring and control system (78), and
wherein the process steps f) and g) are optional.

2. Method according to claim 1, **characterized in that** at least in process step e), an inlet pressure detected by the inlet pressure sensor (64) arranged at the unfiltrate inlet (56) is used as a regulating variable.

3. Method according to claim 2, **characterized in that** at least in process step e), the control of the flow is carried out via a characteristic curve of the feed pump (80), the inlet pressure sensor (64) and a venting liquid detector (76).

4. Method according to any one of the preceding claims, **characterized in that** at least in process step e), an inlet pressure detected by the inlet pressure sensor (64) is used as a regulating variable, and, when necessary, a shutting-off of the main line is carried out by a manual valve.

5. Method according to any one of the preceding claims, **characterized in that** process step g) is carried out by simply shutting off the main line using a shut-off valve either at the unfiltrate inlet (56) or at the filtrate outlet (58), wherein preferably the control of the shut-off valve is carried out via a characteristic curve of the feed pump (80), the inlet pressure sensor (64) and a venting liquid detector (76).

6. Method according to any one of the preceding claims, **characterized in that** a venting liquid detector on a housing of a sterile air filter (54) or on a distributing or collecting pipe is used for draining supervision and/or for air accumulation supervision.

7. Method according to any one of the preceding claims, **characterized in that** the single-use filtration device (10) further comprises a venting liquid detector (76) and a manually operated simple venting valve (74), wherein the process steps a), b) and c) are carried out manually and the process steps d), e) and f) are regulated in an automated manner based on an inlet pressure detected by the inlet pressure sensor (64) and/or are controlled based on a characteristic curve of the feed pump (80) .

8. Method according to any one of claims 1 to 6, **characterized in that** the single-use filtration device (10) further comprises a venting liquid detector (76) and a manually operated simple venting valve (74), wherein the process steps a), b) and c) are carried out manually and the process steps d), e) and f) are regulated in an automated manner based on a flow detected by the flow sensor (62) and an inlet pressure detected by the inlet pressure sensor (64).

9. Method according to any one of claims 1 to 6, **characterized in that** the single-use filtration device (10) further comprises a venting liquid detector (76) and a manually operated simple venting valve (74), wherein the process steps a), b) and c) are carried out manually and the process steps d), e) and f) are regulated in an automated manner based on a flow detected by the flow sensor (62) and an inlet pressure detected by the inlet pressure sensor (64), including starting and shutdown ramps.

10. Method according to any one of claims 1 to 6, **characterized in that** the single-use filtration device (10) further comprises a manually operated simple venting valve (74), wherein the process steps a), b) and c) are carried out manually and the process steps d), e) and f) are regulated in an automated manner based on an inlet pressure detected by the inlet pressure sensor (64) and/or are controlled based on a characteristic curve of the feed pump (80).

11. Method according to any one of the preceding claims, **characterized in that** the process step f) is carried out with pressure supervision.

12. Method according to any one of the preceding claims, **characterized in that** a pH sensor integrated in the single-use filtration device (10) is used for the automated adjustment of a pH value during dosing of an acid or base, and/or **in that** an automated actuator is used during one or more, preferably sterile, samplings, preferably at predetermined time and/or fraction intervals.

13. Method according to any one of the preceding claims, **characterized in that** an automated rinsing medium access is used during a pre-rinsing or wetting of the filter elements, and/or in that an automated drainage output or an automated gas access is used during a discharge of rinsing or wetting medium or a process run-up.

14. Method according to any one of the preceding claims, **characterized in that** at least one of the following sensors integrated in the single-use filtration device (10) is used during a process supervision and/or documentation or data archiving:
- a capacitive, inductive, ultrasonic, vibration or conductive sensor for level measurement and/or liquid detection;
- a temperature sensor;
- a pH sensor;
- a conductivity sensor;
- a TOC sensor;
- a sensor for turbidity measurement.

## Revendications

1. Procédé de filtration d'un gros volume d'un milieu avec un dispositif de filtration jetable (10) pré-stérilisé et au moins partiellement automatisé qui comprend une entrée de non-filtrat (56), une sortie de filtrat (58), une conduite principale se déroulant entre l'entrée de non-filtrat (56) et la sortie de filtrat (58), des éléments de filtre agencés dans la conduite principale, une conduite d'aération (52) ainsi que des capteurs pour la saisie de paramètres de processus déterminés et des équipements de réglage pour le réglage de paramètres de processus déterminés,
dans lequel les capteurs comprennent les capteurs suivants : un capteur de débit (62) agencé au niveau de l'entrée de non-filtrat (56); un capteur de pression à l'entrée (64) agencé au niveau de l'entrée de non-filtrat (56); un détecteur de liquide de sortie (68) agencé au niveau de la sortie de filtrat (58); un capteur de pression à la sortie (72) agencé au niveau de la sortie de filtrat (58),
dans lequel les équipements de réglage comprennent les équipements de réglage suivants : une vanne de régulation à l'entrée (66) agencée au niveau de l'entrée de non-filtrat (56) ; une vanne de régulation à la sortie (70) agencée au niveau de la sortie de filtrat (58); une pompe d'alimentation (80) commandée ou réglée,
dans lequel les capteurs et les équipements de réglage sont reliés à un système de contrôle et de commande (78) extérieur qui est aménagé pour l'évaluation et le traitement de données de capteur ainsi que pour le pilotage des équipements de réglage sur la base d'un ou plusieurs algorithmes de commande, avec les étapes de processus suivantes :
a) remplissage du dispositif de filtration jetable (10) avec un milieu de mouillage à flux restreint;
b) aération du dispositif de filtration jetable (10) par la conduite d'aération (52);
c) fermeture de la conduite d'aération (52);
d) rinçage du dispositif de filtration jetable (10), en particulier des éléments de filtre, avec un milieu de rinçage;
e) filtration du milieu au moyen des éléments de filtre;
f) rinçage ultérieur avec un milieu de rinçage à flux élevé; et
g) fermeture de la conduite d'aération;
dans lequel au moins les étapes d) et e) sont commandées par le système de contrôle et de commande (78), et
dans lequel les étapes de processus f) et g) sont optionnelles.

2. Procédé selon la revendication 1, **caractérisé en ce qu'**au moins à l'étape de processus e) en tant que grandeur réglée est utilisée une pression à l'entrée saisie par le capteur de pression à l'entrée (64) agencé au niveau de l'entrée de non-filtrat (56).

3. Procédé selon la revendication 2, **caractérisé en ce qu'**au moins à l'étape de processus e) la commande du flux s'effectue via une courbe caractéristique de la pompe d'alimentation (80), le capteur de pression à l'entrée (64) et un détecteur de liquide d'aération (76).

4. Procédé selon l'une des revendications précédentes, **caractérisé en ce qu'**au moins à l'étape de processus e) en tant que grandeur réglée est utilisée une pression à l'entrée saisie par le capteur de pression à l'entrée (64) et le cas échéant une obturation de la conduite principale s'effectue à l'aide d'une vanne manuelle.

5. Procédé selon l'une des revendications précédentes, **caractérisé en ce que** l'étape de processus g) s'effectue par simple blocage de la conduite principale avec une vanne d'obturation soit au niveau de l'entrée de non-filtrat (56) soit au niveau de la sortie de filtrat (58), dans lequel de préférence la commande de la vanne d'obturation s'effectue via une courbe caractéristique de la pompe d'alimentation (80), le capteur de pression à l'entrée (64) et un détecteur de liquide d'aération (76).

6. Procédé selon l'une des revendications précédentes, **caractérisé en ce qu'**un détecteur de liquide d'aération au niveau d'un logement d'un filtre à air stérile (54) ou au niveau d'un tube distributeur ou collecteur est employé pour la surveillance de fonctionnement à vide et/ou la surveillance d'accumulation d'air.

7. Procédé selon l'une des revendications précédentes, **caractérisé en ce que** le dispositif de filtration jetable (10) comprend en outre un détecteur de liquide d'aération (76) et une simple vanne d'aération (74) actionnée manuellement, dans lequel les étapes de processus a), b) et c) sont réalisées manuellement, et les étapes de processus d), e) et f) sont automatiquement réglées sur la base d'une pression à l'entrée saisie par le capteur de pression à l'entrée (64) et/ou commandées sur la base d'une courbe caractéristique de la pompe d'alimentation (80).

8. Procédé selon l'une des revendications 1 à 6, **caractérisé en ce que** le dispositif de filtration jetable (10) comprend en outre un détecteur de liquide d'aération (76) et une simple vanne d'aération (74) actionnée manuellement, dans lequel les étapes de processus a), b) et c) sont réalisées manuellement, et les étapes de processus d), e) et f) sont automatiquement réglées sur la base d'un flux saisi par le capteur de débit (62) et d'une pression à l'entrée saisie par le capteur de pression à l'entrée (64).

9. Procédé selon l'une des revendications 1 à 6, **caractérisé en ce que** le dispositif de filtration jetable (10) comprend en outre un détecteur de liquide d'aération (76) et une simple vanne d'aération (74) actionnée manuellement, dans lequel les étapes de processus a), b) et c) sont réalisées manuellement, et les étapes de processus d), e) et f) sont automatiquement réglées sur la base d'un flux saisi par le capteur de débit (62) et d'une pression à l'entrée saisie par le capteur de pression à l'entrée (64), y compris les rampes d'arrivée et de départ.

10. Procédé selon l'une des revendications 1 à 6, **caractérisé en ce que** le dispositif de filtration jetable (10) comprend en outre une simple vanne d'aération (74) actionnée manuellement, dans lequel les étapes de processus a), b) et c) sont réalisées manuellement, et les étapes de processus d), e) et f) sont automatiquement réglées sur la base d'une pression à l'entrée saisie par le capteur de pression à l'entrée (64) et/ou commandées sur la base d'une courbe caractéristique de la pompe d'alimentation (80).

11. Procédé selon l'une des revendications précédentes, **caractérisé en ce que** l'étape de processus f) est réalisée sous surveillance de la pression.

12. Procédé selon l'une des revendications précédentes, **caractérisé en ce que** dans le cadre d'un dosage d'acides ou d'alcalis un capteur de pH intégré au dispositif de filtration jetable (10) est employé pour le réglage automatisé d'une valeur de pH, et/ou **en ce que** dans le cadre d'un ou plusieurs prélèvements d'échantillons, de préférence stériles, un actionneur automatisé est employé, de préférence à des intervalles de temps et/ou fractionnés prédéfinis.

13. Procédé selon l'une des revendications précédentes, **caractérisé en ce que** dans le cadre d'un pré-rinçage ou d'un mouillage des éléments de filtre est employé un accès de milieu de rinçage automatisé, et/ou **en ce que** dans le cadre d'une évacuation de milieux de pré-rinçage ou de mouillage ou d'un déroulement de processus est employée une sortie de drainage automatisée ou une entrée de gaz automatisée.

14. Procédé selon l'une des revendications précédentes, **caractérisé en ce que** dans le cadre d'une surveillance de processus et/ou d'une documentation ou d'un archivage de données est employé au moins l'un des capteurs suivants, lequel est intégré au dispositif de filtration jetable (10) :
- un capteur capacitif, inductif, à ultrasons, de vibrations ou conductif pour la mesure de niveau de remplissage ou la détection de liquide;
- un capteur de température;
- un capteur de pH;
- un capteur de conductivité;
- un capteur de COT;
- un capteur pour la turbidimétrie.
